# EUROPÄISCHE PATENTSCHRIFT

(11) **EP 3 529 096 B1**
(45) Veröffentlichungstag und Bekanntmachung des Hinweises auf die Patenterteilung: **19.08.2020**
(21) Anmeldenummer: 17791927.1
(22) Anmeldetag: 12.10.2017
(51) Int. Cl.: B60K 6/387, B60K 6/40, B60K 6/48

(54) **HYBRIDMODUL UND ANTRIEBSSTRANG**
HYBRID MODULE AND DRIVETRAIN
MODULE HYBRIDE ET CHAÎNE CINÉMATIQUE

(30) Priorität: 24.10.2016 DE 102016220790
(43) Veröffentlichungstag der Anmeldung: 28.08.2019
(73) Patentinhaber: Schaeffler Technologies AG & Co. KG, 91074 Herzogenaurach (DE)
(72) Erfinder: KIMMIG, Karl-Ludwig, 77883 Ottenhöfen (DE)
(86) Internationale Anmeldenummer: PCT/DE2017/100861
(87) Internationale Veröffentlichungsnummer: WO 2018/077332

(56) Entgegenhaltungen:
- DE-A1- 4 311 697
- DE-A1-102009 030 135
- DE-A1-102011 117 781
- DE-A1-102016 207 104

## Beschreibung

Die vorliegende Erfindung betrifft ein Hybridmodul für ein Kraftfahrzeug zum Ankoppeln einer Verbrennungskraftmaschine gemäß dem Oberbegriff des Patentanspruchs 1 sowie einen Antriebsstrang mit dem erfindungsgemäßen Hybridmodul.

Durch die zunehmende Notwendigkeit der Einsparung fossiler Ressourcen sowie der Minderung von Abgasen steigt die Nachfrage nach Kraftfahrzeugen, bei denen der Betrieb eines Verbrennungsmotors mit dem Betrieb einer elektrischen Maschine kombinierbar ist. Zu diesem Zweck werden Hybridmodule benötigt, die den sequentiellen oder auch gleichzeitigen Betrieb eines Verbrennungsaggregats sowie einer elektrischen Maschine erlauben. Moderne Kraftfahrzeuge verfügen außerdem über ein Doppelkupplungsgetriebe, mit welchem Schaltvorgänge effizienter durchführbar sind.
Zurzeit erhältliche Hybridmodule umfassen einen Elektromotor, eine Trennkupplung, deren Betätigungssystem und Lager und Gehäusekomponenten, die die drei Hauptkomponenten zu einer funktionstüchtigen Einheit verbinden. Der Elektromotor ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors.

Aus der DE 10 2013 006 857 A1 ist ein Hybridmodul bekannt, welches eine Dreifach-Kupplungseinrichtung aufweist. Diese Dreifach-Kupplungseinrichtung umfasst eine Trennkupplung zum Anschluss des Hybridmoduls an ein Antriebsaggregat, wie zum Beispiel an eine Verbrennungskraftmaschine, sowie die beiden Teilkupplungen eines Doppelkupplungsgetriebes. Außerdem umfasst das Hybridmodul eine elektrische Maschine in Form eines Elektromotors mit einem Rotor. Die Trennkupplung des Hybridmoduls ist in dem vom Rotor umgebenden Raum angeordnet. Des Weiteren ist eine der beiden Teilkupplungen abschnittsweise in diesem vom Rotor umschlossenen Raum angeordnet. Der restliche Bereich dieser Teilkupplung sowie die andere Teilkupplung sind zwar außerhalb des Rotorraumes angeordnet, jedoch sehr dicht am Rotor der elektrischen Maschine positioniert. Die verwendeten Kupplungen sind vorzugsweise als Nasskupplungen ausgeführt.
Des Weiteren sind Hybridmodule bekannt, in welchen die Trennkupplung als Trockenkupplung ausgeführt ist und ebenfalls in dem vom Rotor der elektrischen Maschine des Hybridmoduls umschlossenen Raum angeordnet ist.
Die elektrische Maschine ist für einen optimalen Betriebstemperaturbereich ausgelegt. Übersteigt die Temperatur in der elektrischen Maschine diesen Optimalbereich, dessen Obergrenze üblicherweise mit 160° C definiert ist, führt dies zu einer Verringerung des Wirkungsgrades der elektrischen Maschine.
Aus der DE 10 2009 030 135 A1 ist ein Hybridmodul bekannt, das auf den Oberbegriff des Patentanspruchs 1 lesbar ist.
Der Erfindung liegt die Aufgabe zugrunde, ein Hybridmodul zur Verfügung zu stellen, welches bei optimaler Nutzung eines gegebenen Bauvolumens einen hohen technischen Wirkungsgrad aufweist.
Diese Aufgabe wird durch das erfindungsgemäße Hybridmodul nach Anspruch 1 gelöst. Vorteilhafte Ausgestaltungsformen des erfindungsgemäßen Hybridmoduls sind in den Unteransprüchen 2 bis 8 angegeben.
Die Erfindung ergänzend wird ein Antriebsstrang mit dem erfindungsgemäßen Hybridmodul nach Anspruch 9 zur Verfügung gestellt.
Die nachfolgend erwähnten Begriffe radial, axial und Umfangsrichtung beziehen sich im Rahmen der vorliegenden Erfindung immer auf die Drehachse des Hybridmoduls.

Die Erfindung betrifft ein Hybridmodul für ein Kraftfahrzeug zum Ankoppeln einer Verbrennungskraftmaschine, mit einer elektrischen Maschine, die einen auf einer Rotationsachse angeordneten Rotor aufweist, sowie mit wenigstens einer Kupplung zur Übertragung eines Drehmoments von einem Antriebsaggregat, die in dem vom Rotor umschlossenen Raum angeordnet ist, und mit einem mit dem Rotor zumindest rotatorisch fest verbundenen und ebenfalls auf der Rotationsachse angeordnetem Rotationsteil, das sich weiter radial von der Rotationsachse erstreckt als der Rotor, so dass von dem Rotor und/ oder der Kupplung in das Rotationsteil eingetragene Wärme in die Umgebung des Rotationsteils abführbar ist, dadurch gekennzeichnet, dass das Rotationsteil mehrere, axial nebeneinander angeordnete Bauteilsegmente aufweist, die parallel zueinander in radialer Erstreckung angeordnet sind, wobei zwischen den Bauteilsegmenten ein Abstand besteht, der die Abgabe von Wärme von den Bauteilsegmenten begünstigt und die Oberfläche des Rotationsteils vergrößert.
Derart wird Wärmeenergie, welche an den Reibflächen der Kupplungen entsteht, schnell an die Umgebungsluft des Rotationsteils und von dort mittels Konvektion weiter an das Hybridmodul-und Getriebegehäuse abgeführt.
Die Erfindung ist sowohl für Trockenkupplungen als auch für Nasskupplungen, insbesondere in einem sogenannten für P2-Hybridmodul einsetzbar, wobei sie durch die effektive Wärmeabfuhr insbesondere in Trockenkupplungen eine optimale Wirkung entfaltet, so dass der Einsatz von Trockenkupplungen im Hybridmodul ermöglicht wird und das Hybridmodul demzufolge einen hohen Wirkungsgrad aufweist bzw. geringe Verlustmomente beim Betrieb eines erfindungsgemäßen Hybridmoduls entstehen. Bei rotationssymmetrischer Ausgestaltung des Rotationsteils sollte dessen radial äußerer Rand deutlich über den Spalt zwischen Rotor und Stator der elektrischen Maschine hinausgehen, so dass das Rotationsteil an seiner radial äußeren Seite eine große Fläche und eine hohe Umfangsgeschwindigkeit aufweist, um in das Rotationssteil von der elektrischen Maschine und/oder von der Kupplung eingetragene Wärme zu speichern und zur Umgebung des Rotationsteils zu übertragen und somit zur Außenseite des Hybridmoduls zu leiten.
Die Rotationsachse ist die der elektrischen Maschine sowie vorzugsweise auch der Kupplung, die im Hybridmodul angeordnet ist.
Der vom Rotor umschlossene Raum ist der Raum, der radial vom dem hohlzylinderförmigen Innenseite des Rotors der elektrischen Maschine umgeben ist. Insbesondere kann das Rotationsteil auch der Kupplungsdeckel der jeweiligen Kupplung sein, oder auch das äußere Kupplungsgehäuse, welcher bzw. welche mit dem Rotor der elektrischen Maschine fest mechanisch verbunden ist, sowohl rotatorisch als auch translatorisch.

Das Rotationsteil ist vorzugsweise ebenfalls zumindest bereichsweise und gegebenenfalls vollständig im vom Rotor umschlossenen Raum angeordnet.
Das Rotationsteil kann einen Bestandteil der Kupplung ausbilden. Insbesondere kann das Rotationsteil als Gegendruckplatte zumindest einer im vom Rotor umschlossenen Raum angeordneten Reibkupplung dienen.

Weiterhin kann das Hybridmodul derart ausgestaltet sein, dass mehrere Kupplungen im vom Rotor umschlossenen Raum angeordnet sind, und dass das Rotationsteil Bestandteil von mehreren Kupplungen ist.
So können z.B. die als K1 bezeichnete erste Teilkupplung und die als K2 bezeichnete zweite Teilkupplung einer Doppelkupplungsvorrichtung im vom Rotor umschlossenen Raum angeordnet sein, und/ oder die als Trennkupplung bezeichnete K0, die die Drehmomentübertragung zum Hybridmodul realisierten kann. Gegebenenfalls können auch nur zwei von diesen Kupplungen im vom Rotor umschlossenen Raum angeordnet sein, und die dritte Kupplung ist axial versetzt zum Rotor angeordnet. Bei Ausführung einer Doppelkupplung, wie sie zum Beispiel zur Betätigung eines Doppelkupplungsgetriebes benötigt wird, kann das Rotationsteils auch als Gegendruckplatte von beiden Teilkupplungen der Doppelkupplung dienen.

Der Rotor der elektrischen Maschine kann an einem Rotorträger angeordnet sein, wobei das mit dem Rotor verbundene Rotationsteil ein am Rotorträger mechanisch fest angeschlossenes Bauteil ist oder ein integraler Bestandteil des Rotorträgers ist.

Vorteilhafterweise ist das Rotationsteil rotationssymmetrisch ausgebildet, wobei dessen Durchmesser Dt zum Durchmesser des Rotors Dr in folgendem Verhältnis steht: Dt/ Dr = 1,1 bis 2,0. Durch den großen Durchmesser des Rotationsteils wird eine hohe Umfangsgeschwindigkeit seines radial äußeren Bereichs gewährleistet, so dass die Ausbildung von Turbulenzen in der das Rotationsteil umgebenden Luft begünstigt wird, was die Effektivität der Wärmeabfuhr weiter erhöht.

In einer weiteren technisch günstigen Ausgestaltung ist vorgesehen, dass das Rotationsteil in zumindest in seinen radial äußeren Bereich Formelemente aufweist, die bei Rotation des Rotationsteils die Ausbildung einer Luftströmung mit zumindest radialer Komponente begünstigen. Das bedeutet, dass der äußere Bereich des Rotationsteils eine entsprechende Geometrie aufweist, welche die Strömungsgeschwindigkeit der Glockenluft vergrößern. Eine solche Geometrie kann z.B. ähnlich gestaltet sein wie Schaufeln von einem Radialgebläse.

Zwecks Herausführung des Rotationsteils aus dem vom Rotor umschlossenen Raum ist vorzugsweise vorgesehen, dass das Rotationsteil einen radial inneren Bereich, einen radial äußeren Bereich sowie einen zwischen dem radial inneren Bereich und dem radial äußeren Bereich gekröpften Bereich aufweist, wobei der radial innere Bereich in dem vom Rotor umschlossenen Raum angeordnet ist und der radial äußere Bereich sich entlang der axialen Richtung versetzt an einer Seite des Rotors erstreckt. Dabei soll erfindungsgemäß nicht ausgeschlossen sein, dass zwischen dem radial äußeren Bereich und dem Rotor noch weitere Bauteile des Hybridmoduls angeordnet sind.

Die Erfindung ergänzend wird außerdem ein Antriebsstrang für ein Kraftfahrzeug mit einer Verbrennungskraftmaschine und einem erfindungsgemäßen Hybridmodul zur Verfügung gestellt, sowie mit einem Antriebs-Getriebe, wobei das Hybridmodul mittels Kupplungen mit dem Verbrennungsmotor sowie mit dem Antriebs-Getriebe mechanisch verbunden ist.
Der Antriebsstrang ist dazu eingerichtet, ein von einem Antriebsaggregat, zum Beispiel einer Energiewandlungsmaschine, bevorzugt einer Verbrennungskraftmaschine oder einer elektrischen Antriebsmaschine, bereitgestelltes und über ihre Abtriebswelle abgegebenes Drehmoment für zumindest einen Verbraucher zuschaltbar und abschaltbar zu übertragen. Ein Verbraucher ist zum Beispiel ein Antriebsrad eines Kraftfahrzeugs oder ein elektrischer Generator zum Bereitstellen von elektrischer Energie. Umgekehrt ist auch eine Aufnahme einer von zum Beispiel einem Antriebsrad eingebrachten Trägheitsenergie umsetzbar. Das Antriebsrad bildet dann das Antriebsaggregat, wobei dessen Trägheitsenergie mittels der Reibkupplung auf einen elektrischen Generator zur Rekuperation, also zur elektrischen Speicherung der Bremsenergie, in einem entsprechend eingerichteten Antriebsstrang übertragbar ist.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
Fig. 1: eine erste Ausführungsform eines erfindungsgemäßen Hybridmoduls in Schnittansicht,
Fig. 2: ein Rotationsteil des erfindungsgemäßen Hybridmoduls in teilgeschnittener perspektivischer Ansicht,
Fig. 3: das Rotationsteil des erfindungsgemäßen Hybridmoduls in perspektivischer Ansicht,
Fig. 4: ein nicht-erfindungsgemäßes Hybridmodul in Schnittansicht.

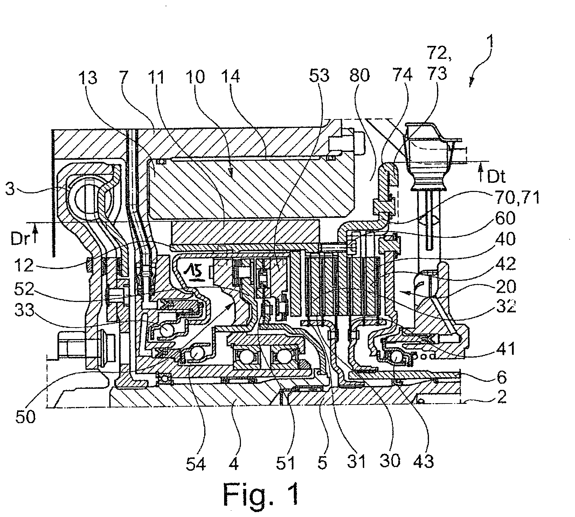

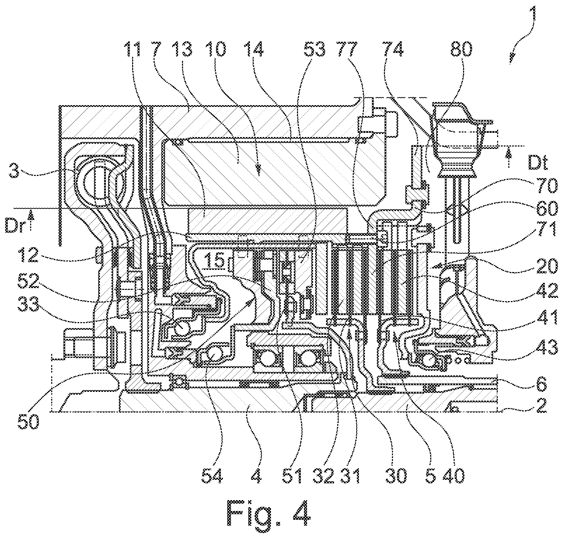

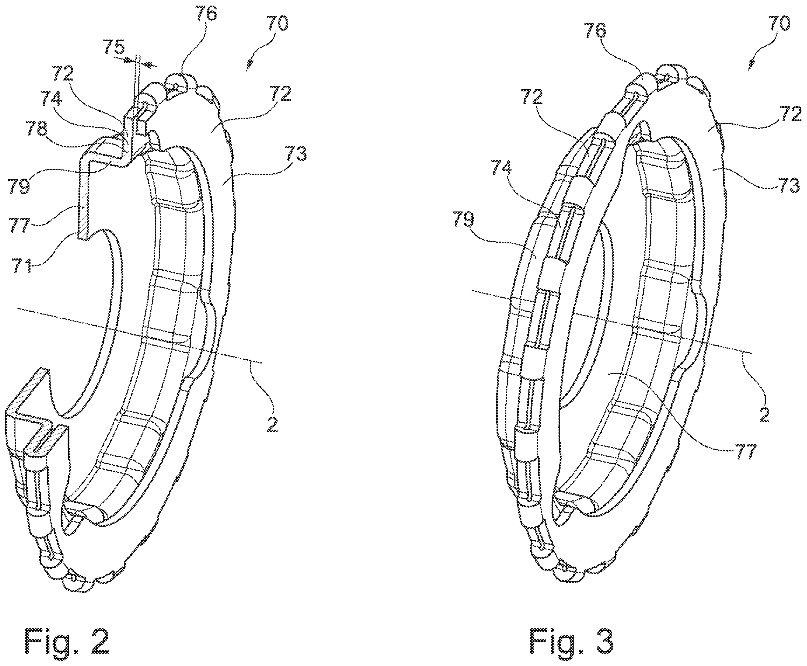

Die Figuren 1 und 4 zeigen somit zwei unterschiedliche Ausführungsformen des Rotationsteils und demzufolge auch des gesamten erfindungsgemäßen Hybridmoduls, und die Figuren 2 und 3 zeigen das gleiche Rotationsteil in unterschiedlicher Darstellung.
Zunächst wird der generelle Aufbau des erfindungsgemäßen Hybridmoduls anhand Figur 1 erläutert. Das Hybridmodul 1 weist eine Rotationsachse 2 auf, auf der in der hier dargestellten Ausführungsform gemeinsam ein Zweimassenschwinger 3, eine Antriebswelle 4 zum Anschluss eines hier nicht dargestellten Antriebsaggregats, wie zum Beispiel einer Verbrennungskraftmaschine, eine erste Abtriebswelle 5 eines Doppelkupplungsgetriebes und eine zweite Abtriebswelle 6 des Doppelkupplungsgetriebes angeordnet sind. Ebenfalls auf der Rotationsachse 2 ist eine elektrische Maschine 10 angeordnet, deren Rotor 11 in einem Stator 13 um die Rotationsachse 2 dreht. Der Rotor 11 ist dabei auf einem Rotorträger 12 angeordnet. Des Weiteren umfasst das Hybridmodul 1 eine mit der ersten Abtriebswelle 5 mechanisch gekoppelte erste Kupplung 30 sowie eine mit der zweiten Abtriebswelle 6 gekoppelte zweite Kupplung 40. Die erste Kupplung 30 und die zweite Kupplung 40 bilden dabei eine Kupplungseinheit 20 des hier nicht dargestellten Doppelkupplungsgetriebes aus. Vorzugsweise sind die hier angeordneten Kupplungen, zumindest die erste Kupplung 30 und die zweite Kupplung 40, als Trockenkupplungen ausgeführt.
Außerdem umfasst das Hybridmodul 1 eine Trennkupplung 50, mit welcher die Antriebswelle 4 mit dem Rotor 11 über den Rotorträger 12 mechanisch verbindbar ist. Zur Betätigung der Teilkupplungen ist der ersten Kupplung 30 ein erstes Betätigungssystem 33 und der zweiten Kupplung 40 ein zweites Betätigungssystem 43 zugeordnet. Der Trennkupplung 50 ist ein Trennkupplungsbetätigungssystem 54 zugeordnet. Mit den Betätigungssystemen 33, 43, 54 lassen sich die jeweiligen Kupplungen 30, 40, 50 öffnen und schließen und derart Drehmomente übertragen. Durch die Betätigung des Trennkupplungsbetätigungssystems 54 wird die Anpressplatte 52 der Trennkupplung 50 axial verlagert, sodass diese eine Kupplungsscheibe 51 zwischen sich und der Gegendruckplatte 53 der Trennkupplung 50 reibschlüssig fixiert und derart Drehmoment von der Antriebswelle 4 auf den mit der Kupplungsscheibe 51 der Trennkupplung 50 verbundenen Rotorträger 12 übertragen kann. Je nach Betätigung der ersten Kupplung 30 beziehungsweise zweiten Kupplung 40 über das erste Betätigungssystem 33 beziehungsweise das zweite Betätigungssystem 43 wird die jeweilige Anpressplatte, nämlich die erste Anpressplatte 32 oder die zweite Anpressplatte 42, derart axial verlagert, dass die erste Kupplungsscheibe 31 beziehungsweise die zweite Kupplungsscheibe 42 zwischen der jeweiligen Anpressplatte 32, 42 und einer Gegendruckplatte 71 reibschlüssig fixiert wird, sodass Drehmoment von dem mit der Gegendruckplatte 71 fest verbundenen Rotorträger 12 über die jeweilige Kupplungsscheibe, nämlich über die erste Kupplungsscheibe 31 beziehungsweise über die zweite Kupplungsscheibe 41, an die erste Abtriebswelle 5 beziehungsweise zweite Abtriebswelle 6 übertragen werden kann.
Die Gegendruckplatte 71, die der ersten Kupplung 30 sowie auch der zweiten Kupplung 40 dient, ist hier als ein Rotationsteil 70 ausgeführt, welches sich axial neben dem Rotor 11 und auch neben dem Stator 13 der elektrischen Maschine 10 nach radial nach außen erstreckt. Dieses Rotationsteil 70 ist mit einem Befestigungsmittel 60, hier mit der dargestellten Schraube, fest mit dem Rotorträger 12 verbunden. Vom Rotor 11 der elektrischen Maschine 10 kann somit in einfacher Weise durch Wärmeleitung Wärme von der elektrischen Maschine 10 über den Rotorträger 12 in das Rotationsteil 70 eingetragen werden und von dort an die Umgebung des Rotationsteils, hier die sogenannte Glockenluft 80, abgegeben werden. Über Konvektion kann die Wärme dieser Glockenluft 80 an das umgebende, hier nur teilweise dargestellte Gehäuse 7 und von dort an die Umgebungsluft des Hybridmoduls 1 abgeführt werden.
Es ist ersichtlich, dass die Trennkupplung 50 vollständig und die erste Kupplung 30 teilweise in dem vom Rotor 11 umschlossenen Raum 15 angeordnet ist. Dieser vom Rotor umschlossene Raum 15 ist dabei ein ideeller Zylinder, der durch die Innenseite des Rotors 11 bei dessen Rotation ausgebildet ist.
Es ist deutlich erkennbar, dass der Durchmesser Dr des Rotors 11 viel geringer ist als der Durchmesser Dt des Rotationsteils 70. Dadurch wird gewährleistet, dass die Fläche des Rotationsteils 70 sehr groß ist und somit eine große Fläche zur Wärmeabgabe an die Umgebung zur Verfügung steht. Zudem weist der radial äußere Bereich des Rotationsteils 70 eine höhere Umfangsgeschwindigkeit als der Rotor 11 selbst auf, sodass auch dadurch eine effiziente Wärmeabfuhr an die Umgebung gewährleistet ist, noch zumal die hohe Geschwindigkeit die Ausbildung von die Wärmeabfuhr begünstigenden Turbulenzen in der Glockenluft 80 bewirkt.
Erkennbar ist weiterhin, dass das Rotationsteil 70 mehrere, axial nebeneinander angeordnete Bauteilsegmente 72 aufweist. Diesbezüglich wird auf die Figuren 2 und 3 verwiesen.

Aus den Figuren 2 und 3 ist ersichtlich, dass diese Bauteilsegmente 72 parallel zueinander in radialer Erstreckung angeordnet sind, wobei zwischen ihnen ein Abstand 75 beziehungsweise ein Spalt besteht, der die Abgabe von Wärme von den Bauteilsegmenten 72 begünstigt und damit insgesamt die Oberfläche des Rotationsteils 70 vergrößert. So umfasst das Rotationsteil 70 ein ringförmiges Segment 73, welches über Stege 76 an einem zumindest im radial äußeren Bereich des Rotationsteils 70 ausgebildeten flächigen Segment 74 angeschlossen ist.
Ein solcher Steg 76 ist dabei derart schmal ausgeführt, dass in dem Bereich des Abstandes 75 zwischen den Bauteilsegmenten 72 vorhandene Luft aufgrund der Rotation des Rotationsteils 70 und der dabei auf die Luft wirkenden Zentrifugalkraft radial aus dem Bereich zwischen dem ringförmigen Segment 73 und dem flächigen Segment 74 austreten kann. Zur Realisierung der Herausführung der Wärme der elektrischen Maschine und/oder der Kupplungen aus dem vom Rotor 11 umschlossenen Raum 15 beziehungsweise zur Wegleitung der Wärme von der elektrischen Maschine 10 über Wärmeleitung weist das Rotationsteil einen radial inneren Bereich 77 auf, welcher auch als Gegendruckplatte 71 dient. An diesem radial inneren Bereich 77 schließt sich ein gekröpfter Bereich 79 an, von dem sich wiederum nach radial außen der radial äußere Bereich 78 erstreckt. Dieser radial äußere Bereich 78 stellt das flächige Segment 74 des Rotationsteils 70 dar, an welches sich in beschriebener Weise über die Stege 76 parallel dazu das ringförmige Segment 73 anschließt.

In Figur 4 ist ein nicht-erfindungsgemäßes Hybridmoduls dargestellt. Der Unterschied zu dem in Figur 1 dargestellten Ausführungsbeispiel besteht in Figur 4 darin, dass das Rotationsteil 70 lediglich ein flächiges Segment 74 als radial äußeren Bereich 78 aufweist, und keine dazu parallel angeordnete Masse, wie es in Figur 1 dargestellt ist. Beiden, in den Figuren 1 und 4 dargestellten Ausführungsbeispielen ist gemeinsam, dass der Durchmesser Dt des Rotationsteils 70 wesentlich größer ist als der Durchmesser Dr des Rotors 11. Das heißt, dass der radial äußere Bereich 78 des Rotationsteils 70 weiter nach radial außen im Bezug zur Rotationsachse 2 reicht, als der Abstand zur Rotationsachse 2, den der Spalt 14 zwischen dem Stator 13 und dem Rotor 11 der elektrischen Maschine 10 aufweist.

Mit dem hier vorgeschlagenen Hybridmodul wird eine kompakte Einheit mit mehreren integrierten Kupplungen, idealerweise auch in trockener Ausführungsform, zur Verfügung gestellt, welche kostengünstig herstellbar ist und geringe Verlustmomente aufweist.

### Bezuqszeichenliste

- 1: Hybridmodul
- 2: Rotationsachse
- 3: Zweimassenschwinger
- 4: Antriebswelle
- 5: erste Abtriebswelle
- 6: zweite Abtriebswelle
- 7: Gehäuse
- 10: elektrische Maschine
- 11: Rotor
- 12: Rotorträger
- Dr: Durchmesser des Rotors
- 13: Stator
- 14: Spalt
- 15: vom Rotor umschlossener Raum
- 20: Kupplungseinheit
- 30: erste Kupplung
- 31: erste Kupplungsscheibe
- 32: Erste Anpressplatte
- 33: erstes Betätigungssystem
- 40: zweite Kupplung
- 41: zweite Kupplungsscheibe
- 42: zweite Anpressplatte
- 43: zweites Betätigungssystem
- 50: Trennkupplung
- 51: Kupplungsscheibe der Trennkupplung
- 52: Anpressplatte der Trennkupplung
- 53: Gegendruckplatte der Trennkupplung
- 54: Trennkupplungsbetätigungssystem
- 60: Befestigungsmittel
- 70: Rotationsteil
- 71: Gegendruckplatte
- Dt: Durchmesser des Rotationsteils
- 72: Bauteilsegment
- 73: ringförmiges Segment
- 74: flächiges Segment
- 75: Abstand
- 76: Steg
- 77: radial innerer Bereich
- 78: radial äußerer Bereich
- 79: gekröpfter Bereich
- 80: Glockenluft

## Patentansprüche

1. Hybridmodul (1) für ein Kraftfahrzeug zum Ankoppeln einer Verbrennungskraftmaschine, mit einer elektrischen Maschine (10), die einen auf einer Rotationsachse (2) angeordneten Rotor (11) aufweist, sowie mit wenigstens einer Kupplung (50) zur Übertragung eines Drehmoments von einem Antriebsaggregat, die in dem vom Rotor (11) umschlossenen Raum (15) angeordnet ist, und mit einem mit dem Rotor (11) zumindest rotatorisch fest verbundenen und ebenfalls auf der Rotationsachse (2) angeordnetem Rotationsteil (70), das sich weiter radial von der Rotationsachse (2) erstreckt als der Rotor (11), so dass von dem Rotor (11) und/ oder der Kupplung (50) in das Rotationsteil (70) eingetragene Wärme in die Umgebung des Rotationsteils (70) abführbar ist, **dadurch gekennzeichnet, dass** das Rotationsteil (70) mehrere, axial nebeneinander angeordnete Bauteilsegmente (72) aufweist, die parallel zueinander in radialer Erstreckung angeordnet sind, wobei zwischen den Bauteilsegmenten (72) ein Abstand (75) besteht, der die Abgabe von Wärme von den Bauteilsegmenten (72) begünstigt und die Oberfläche des Rotationsteils (70) vergrößert.

2. Hybridmodul nach Anspruch 1, **dadurch gekennzeichnet, dass** das Rotationsteil (70) zumindest bereichsweise ebenfalls im vom Rotor (11) umschlossenen Raum (15) angeordnet ist.

3. Hybridmodul nach einem der Ansprüche 1 und 2, **dadurch gekennzeichnet, dass** das Rotationsteil (70) einen Bestandteil der Kupplung (50) ausbildet, insbesondere dass das Rotationsteil (70) als Gegendruckplatte (53, 71) zumindest einer im vom Rotor (11) umschlossenen Raum (15) angeordneten Reibkupplung (50) dient.

4. Hybridmodul nach einem der vorhergehenden Ansprüche, **dadurch gekennzeichnet, dass** mehrere Kupplungen (50) im vom Rotor (11) umschlossenen Raum (15) angeordnet sind, und dass das Rotationsteil (70) Bestandteil von mehreren Kupplungen (30, 40, 50) ist.

5. Hybridmodul nach einem der vorhergehenden Ansprüche, **dadurch gekennzeichnet, dass** der Rotor (11) der elektrischen Maschine (10) an einem Rotorträger (12) angeordnet ist und dass das mit dem Rotor (11) verbundene Rotationsteil (70) ein am Rotorträger (12) mechanisch fest angeschlossenes Bauteil ist oder ein integraler Bestandteil des Rotorträgers (12) ist.

6. Hybridmodul nach einem der vorhergehenden Ansprüche, **dadurch gekennzeichnet, dass** das Rotationsteil (70) rotationssymmetrisch ausgebildet ist, wobei dessen Durchmesser Dt zum Durchmesser des Rotors Dr in folgendem Verhältnis steht: Dt/ Dr = 1,1 bis 2,0.

7. Hybridmodul nach einem der vorhergehenden Ansprüche, **dadurch gekennzeichnet, dass** das Rotationsteil (70) in zumindest in seinen radial äußeren Bereich Formelemente aufweist, die bei Rotation des Rotationsteils (70) die Ausbildung einer Luftströmung mit zumindest radialer Komponente begünstigen.

8. Hybridmodul nach einem der vorhergehenden Ansprüche, **dadurch gekennzeichnet, dass** das Rotationsteil (70) einen radial inneren Bereich (77), einen radial äußeren Bereich (78) sowie einen zwischen dem radial inneren Bereich (77) und dem radial äußeren (78) Bereich gekröpften Bereich (79) aufweist, wobei der radial innere Bereich (77) in dem vom Rotor (11) umschlossenen Raum (15) angeordnet ist und der radial äußere (78) Bereich sich entlang der axialen Richtung versetzt an einer Seite des Rotors (11) erstreckt.

9. Antriebsstrang für ein Kraftfahrzeug mit einer Verbrennungskraftmaschine und einem Hybridmodul (1) gemäß einem der Ansprüche 1 bis 8, sowie mit einem Antriebs-Getriebe, wobei das Hybridmodul (1) mittels Kupplungen mit dem Verbrennungsmotor sowie mit dem Antriebs-Getriebe mechanisch verbunden ist.

## Claims

1. A hybrid module (1) for a motor vehicle for coupling an internal combustion engine, having an electrical machine (10) that comprises a rotor (11) arranged on an axis of rotation (2), and having at least one coupling (50) for transmitting a torque from a drive unit which is arranged in the space (15) enclosed by the rotor (11), and having a rotary part (70) which is fixedly connected to the rotor (11) at least rotationally and also arranged on the axis of rotation (2), which extends further radially from the axis of rotation (2) than the rotor (11), so that heat introduced into the rotary part (70) by the rotor (11) and/or the coupling (50) can be dissipated into the surroundings of the rotary part (70), **characterised in that** the rotary part (70) has a plurality of component segments (72) arranged axially next to one another, which are arranged in parallel with one another in the radial extension, there being a distance (75) between the component segments (72) that favours the dissipation of heat from the component segments (72) and enlarges the surface of the rotary part (70).

2. The hybrid module according to claim 1, **characterised in that** the rotary part (70) is also arranged at least in some regions in the space (15) enclosed by the rotor (11).

3. The hybrid module according to any one of claims 1 and 2, **characterised in that** the rotary part (70) forms part of the coupling (50), in particular **in that** the rotary part (70) serves as a counterpressure plate (53, 71) of at least one friction coupling (50) arranged in the space (15) enclosed by the rotor (11).

4. The hybrid module according to any one of the preceding claims, **characterised in that** a plurality of couplings (50) are arranged in the space (15) enclosed by the rotor (11), and **in that** the rotary part (70) is part of a plurality of couplings (30, 40, 50).

5. The hybrid module according to any one of the preceding claims, **characterised in that** the rotor (11) of the electrical machine (10) is arranged on a rotor carrier (12) and **in that** the rotary part (70) connected to the rotor (11) either is a component that is mechanically fixedly connected to the rotor carrier (12) or is an integral part of the rotor carrier (12).

6. The hybrid module according to any one of the preceding claims, **characterised in that** the rotary part (70) is designed to be rotationally symmetrical, the diameter Dt thereof being related to the diameter of the rotor Dr in the following ratio: Dt / Dr = 1.1 to 2.0.

7. The hybrid module according to any one of the preceding claims, **characterised in that** the rotary part (70) has, at least in its radially outer region, shaped elements which, upon rotation of the rotary part (70), promote the formation of an air flow having at least one radial component.

8. The hybrid module according to any one of the preceding claims, **characterised in that** the rotary part (70) has a radially inner region (77), a radially outer region (78) and a region (79) cranked between the radially inner region (77) and the radially outer region (78), the radially inner area (77) being arranged in the space (15) enclosed by the rotor (11) and the radially outer region (78) extending in an offset manner in the axial direction on one side of the rotor (11).

9. A drivetrain for a motor vehicle having an internal combustion engine and a hybrid module (1) according to any one of claims 1 to 8, and having a drive transmission, the hybrid module (1) being mechanically connected to the internal combustion engine and to the drive transmission by means of couplings.

## Revendications

1. Module hybride (1) pour véhicule automobile destiné à l'embrayage d'un moteur à combustion interne, comprenant une machine électrique (10), laquelle comporte un rotor (11) disposé sur un axe de rotation (2), ainsi qu'au moins un embrayage (50) pour transmettre un couple d'une unité d'entraînement, laquelle est disposée dans un espace (15) enfermé par le rotor (11), et une pièce tournante (70) raccordée, au moins de manière fixe en rotation, au rotor (11) et également disposée sur l'axe de rotation (2), laquelle s'étend plus loin radialement de l'axe de rotation (2) que le rotor (11) de telle sorte que la chaleur introduite par le rotor (11) et/ou l'embrayage (50) dans la pièce tournante (70) peut être dissipée dans l'environnement de la pièce tournante (70), **caractérisé en ce que** la pièce tournante (70) comporte une pluralité de segments de composant (72) disposés axialement les uns à côté des autres, lesquels sont disposés parallèlement les uns aux autres dans l'étendue radiale, dans lequel, entre les segments de composant (72), se trouve un espacement (75), lequel favorise la libération de chaleur des segments de composant (72) et lequel augmente la surface de la pièce tournante (70).

2. Module hybride selon la revendication 1, **caractérisé en ce que** la pièce tournante (70) est également disposée, au moins par zones, dans l'espace (15) enfermé par le rotor (11).

3. Module hybride selon l'une des revendications 1 et 2, **caractérisé en ce que** la pièce tournante (70) forme un élément constitutif de l'embrayage (50), en particulier que la pièce tournante (70) sert de plaque de contre-pression (53, 71) d'au moins un embrayage à friction (50) disposé dans l'espace (15) enfermé par le rotor (11).

4. Module hybride selon l'une quelconque des revendications précédentes, **caractérisé en ce qu'**une pluralité d'embrayages (50) sont disposés dans l'espace (15) enfermé par le rotor (11), et que la pièce tournante (70) est l'élément constitutif de la pluralité d'embrayages (30, 40, 50).

5. Module hybride selon l'une quelconque des revendications précédentes, **caractérisé en ce que** le rotor (11) de la machine électrique (10) est disposé sur un porte-rotor (12) et que la pièce tournante (70) raccordée au rotor (11) est un composant fixé mécaniquement disposé sur le support de rotor (12) ou est un élément constitutif intégral du porte-rotor (12).

6. Module hybride selon l'une quelconque des revendications précédentes, **caractérisé en ce que** la pièce tournante (70) est conçue pour être symétrique en rotation, son diamètre Dt étant proportionnel au diamètre du rotor Dr dans le rapport suivant : Dt/Dr = 1,1 à 2,0.

7. Module hybride selon l'une quelconque des revendications précédentes, **caractérisé en ce que** la pièce tournante (70) comporte, au moins dans sa zone radiale extérieure, des éléments moulés, lesquels, lorsque la pièce tournante (70) tourne, favorisent la formation d'un flux d'air à l'aide d'au moins une composante radiale.

8. Module hybride selon l'une quelconque des revendications précédentes, **caractérisé en ce que** la pièce tournante (70) comporte une zone radiale intérieure (77), une zone radiale extérieure (78) ainsi qu'une zone (79) coudée entre la zone radiale intérieure (77) et la zone radiale extérieure (78), dans lequel la zone radiale intérieure (77) est disposée dans l'espace (15) enfermé par le rotor (11) et la zone radiale extérieure (78) s'étend le long de la direction axiale décalée d'un côté du rotor (11).

9. Chaîne cinématique pour véhicule automobile doté d'un moteur à combustion interne et d'un module hybride (1) selon l'une quelconque des revendications 1 à 8, ainsi que d'un engrenage d'entraînement, dans laquelle le module hybride (1) est raccordé mécaniquement au moteur à combustion interne et à l'engrenage d'entraînement au moyen des embrayages.
